(19) Europäisches Patentamt / European Patent Office / Office européen des brevets

(11) **EP 4 229 381 B1**

(12) **EUROPÄISCHE PATENTSCHRIFT**

(45) Veröffentlichungstag und Bekanntmachung des Hinweises auf die Patenterteilung:
**07.05.2025 Patentblatt 2025/19**

(21) Anmeldenummer: **20792396.2**

(22) Anmeldetag: **14.10.2020**

(51) Internationale Patentklassifikation (IPC):
**G01L 15/00** (2006.01)   **G01L 21/12** (2006.01)
**G01L 21/30** (2006.01)   **G01L 27/02** (2006.01)
**G01N 27/00** (2006.01)

(52) Gemeinsame Patentklassifikation (CPC):
**G01L 21/12; G01L 15/00; G01L 21/30; G01L 27/02**

(86) Internationale Anmeldenummer:
**PCT/EP2020/078937**

(87) Internationale Veröffentlichungsnummer:
**WO 2022/078594 (21.04.2022 Gazette 2022/16)**

(54) **VERFAHREN ZUM BETRIEB EINER GRUPPE VON DRUCKSENSOREN**

METHOD FOR OPERATING A GROUP OF PRESSURE SENSORS

PROCÉDÉ DE FONCTIONNEMENT D'UN GROUPE DE CAPTEURS DE PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.08.2023 Patentblatt 2023/34**

(73) Patentinhaber: **Inficon AG**
**9496 Balzers (LI)**

(72) Erfinder:
• **ANDREAUS, Bernhard**
**8640 Rapperswil (CH)**
• **ENDERES, Rolf**
**9479 Malans (CH)**
• **BERG, Christian**
**8712 Stäfa (CH)**
• **WÜEST, Martin**
**7208 Malans (CH)**

(74) Vertreter: **Troesch Scheidegger Werner AG**
**Schwäntenmos 14**
**8126 Zumikon (CH)**

(56) Entgegenhaltungen:
**EP-A1- 1 394 523      EP-A2- 0 379 841**
**DE-A1- 19 860 500**

**Beschreibung**

Die vorliegende Erfindung betrifft ein Verfahren zum Betrieb einer Gruppe von mindestens zwei Drucksensoren.

Im Stand der Technik sind verschiedene Messprinzipien zur Messung eines Drucks bekannt. Man kann diese Messprinzipien in zwei Gruppen einteilen, nämlich die direkten Druckmessprinzipien, welche letztlich eine Kraft pro Fläche bestimmen, und die indirekten Druckmessprinzipien, welche eine Abhängigkeit einer anderen physikalischen Grösse vom Druck ausnutzen, beispielsweise die Druckabhängigkeit der Wärmeleitfähigkeit eines Gases. Indirekte Druckmessprinzipien zeigen eine mehr oder weniger starke Abhängigkeit von der Art des Gases.

Beispiele für Drucksensoren, welche ein direktes, gasartunabhängiges Druckmessprinzip anwenden sind Piezo-Membran-Manometer, Kapazitäts-Membran-Manometer oder optische Membran-Manometer. Beispiele für Drucksensoren, welche ein indirektes, gasartabhängiges Druckmessprinzip anwenden sind Pirani-Sensoren, Kaltkathoden-Ionisationsvakuummeter (z.B. invertiertes Magnetron) oder Heisskathoden-Ionisationsvakuummeter (z.B. Bayard-Alpert).

Drucksensoren sind aufgrund ihres Messprinzips meistens für einen spezifischen Druckmessbereich ausgelegt. Der Messbereich kann durch die Kombination mehrerer Drucksensoren zu einer Gruppe von Drucksensoren vergrössert werden. Im Fall einer Kombination von Drucksensoren, welche allesamt ein indirektes Druckmessprinzip anwenden, wird die Messunsicherheit jedoch durch die Gasartabhängigkeit vergrössert, da die Gasartabhängigkeit bei den beteiligten Drucksensoren unterschiedlich sein kann. Ausserdem ist oftmals nicht genau bekannt, welches Gas oder welche Gasmischung vorliegt.

Folgende Dokumente zeigen den Stand der Technik auf.

EP 1 394 523 A1 betrifft ein Verfahren zum Betrieb eines Totaldrucktransmitters, welcher aus mindestens zwei Sensorelementen besteht. In einem höheren Druckbereich von ca. $10^{-3}$ bis 1000 mbar wird der Druck mit einem ersten Sensorelement erfasst. Ein zweites Sensorelement, in der Regel ein Heisskathodensensor, bleibt während dieser Zeit ausser Betrieb. Dadurch wird dieser geschont und die Standzeit verlängert. Zur Kalibrierung des unteren Stützpunktes des ersten Sensorelementes genügt es, wenn in grösseren Abständen zu diesem Zweck das Heisskathodensystem eingeschaltet wird.

DE 198 60 500 A1 betrifft eine Vorrichtung zur Druckmessung umfassend einen ersten Drucksensor zum Erfassen eines Drucks in einem ersten Druckbereich, einen zweiten Drucksensor zum Erfassen eines Drucks in einem zweiten Druckbereich, wobei sich der erste und der zweite Druckbereich überlappen, und eine Kalibriereinrichtung zum Kalibrieren des zweiten Drucksensors mittels des ersten Drucksensors durch Korrigieren der Ausgabe des zweiten Drucksensors, basierend auf den Ausgaben des ersten und des zweiten Drucksensors innerhalb des Überlappungsbereichs des ersten und des zweiten Druckbereichs, derart, dass die kalibrierte Ausgabe des zweiten Drucksensors in dem Überlappungsbereich im Wesentlichen gleich der Ausgabe des ersten Drucksensors ist. Damit wird auf einfache und gleichzeitig genaue Art und Weise eine Kalibrierung des zweiten Drucksensors erreicht, was besonders vorteilhaft ist, wenn Druckmessungen im Vakuumbereich durchgeführt werden müssen, bei denen der erste Drucksensor ein Absolutdrucksensor ist, und der zweite Drucksensor z.B. ein Wärmeleitungs-Drucksensor oder ein Ionisations-Drucksensor etc. ist, der von der Gasart abhängig ist.

EP 0 379 841 A2 stellt ein Verfahren zum Messen von Druck, vorzugsweise Vakuum, vor. Die Mess-Signale aus einem Wärmeleitungsmanometer und Mess-Signale aus einem Gasreibungsmanometer werden vorzugsweise durch Multiplikation zu einem gemeinsamen Mess-Signal verarbeitet. Sie werden linear überlagert oder addiert. Vorzugsweise wird als Wärmeleitungsmanometer ein Piranimanometer und als Gasreibungsmanometer ein Stimmgabelquarzmanometer verwendet.

Die Aufgabe der vorliegenden Erfindung bestand darin, aus der Gasabhängigkeit von Drucksensoren entstehende Schwierigkeiten zu entschärfen. Die Aufgabe der vorliegenden Erfindung bestand insbesondere darin, ein Verfahren zum Betrieb einer Gruppe von Drucksensoren zur Verfügung zu stellen, welche aus der Gasartabhängigkeit von Drucksensoren entstehende Messungenauigkeiten reduziert.

Diese Aufgabe wird durch ein Verfahren nach Anspruch 1 gelöst.

Das erfindungsgemässe Verfahren ist ein Verfahren zum Betrieb einer Gruppe von Drucksensoren. Die Drucksensoren, welche zur Gruppe von Drucksensoren gehören, sind derart angeordnet, dass sie den Druck in einem gemeinsamen Messvolumen messen können. Die Gruppe von Drucksensoren umfasst mindestens einen ersten Drucksensor mit einem ersten Druckmessbereich und einen zweiten Drucksensor mit einem zweiten Druckmessbereich, wobei der erste und der zweite Druckmessbereich in einem Überlapp-Druckmessbereich überlappen. Der erste Drucksensor beruht auf einem ersten indirekten Druckmessprinzip und ist eingerichtet zur Ausgabe eines auf ein Referenzgas, z.B. Stickstoff, kalibrierten ersten Mess-Signals. Der zweite Drucksensor beruht auf einem zweiten indirekten Druckmessprinzip und ist eingerichtet zur Ausgabe eines auf dasselbe Referenzgas kalibrierten zweiten Mess-Signals.

Das Verfahren umfasst die Schritte:

a) Bereitstellen von gasartspezifischen ersten Kalibrierungsdaten für das erste Mess-Signal und von gasartspezifischen zweiten Kalibrierungsdaten für das zweite Mess-Signal, wobei die ersten und zweiten Kalibrierungsdaten eine Abhängigkeit des ersten respektive zweiten Mess-Signals vom effektiven Druck und von einer Gasart im gemeinsamen Messvolumen für eine Liste von Gasarten umfassend mindestens eine erste Gasart, die verschieden ist vom Referenzgas, beschreiben;

b) im Wesentlichen gleichzeitiges Erfassen eines ersten Messwerts des ersten Mess-Signals und Erfassen eines zweiten Messwerts des zweiten Mess-Signals;

c) Bestimmen einer Resultat-Gasart als diejenige Gasart in der Liste von Gasarten, welche unter Berücksichtigung der ersten und zweiten Kalibrierungsdaten am besten zur Kombination des erfassten ersten Messwerts und des erfassten zweiten Messwerts passt.

Die ersten und die zweiten Kalibrierungsdaten können beispielsweise als Kombination einer mathematischen Funktion und mindestens einem Parameter dieser Funktion definiert sein. Die Kalibrierungsdaten können alternativ als Tabellenwerte (in einer Look-Up-Table) definiert sein. Ein Ablesen einer Kalibrierungskurve kann durch Interpolieren der Tabellenwerte erfolgen.

Die Erfinder haben erkannt, dass mit der vorliegenden Erfindung, auf einfache Art und Weise eine Information über den im gemeinsamen Messvolumen vorhandenen Gastyp erhalten werden kann. Diese Information kann, wie unten noch weiter diskutiert wird, zu einer Verbesserung der Genauigkeit von Druckmessungen basierend auf den Messignalen der Drucksensoren verwendet werden. Diese Information über den Gastyp ist aber bereits für sich genommen wertvoll. Die Gruppe von Drucksensoren kann nämlich, wenn sie gemäss dem erfindungsgemässen Verfahren betrieben wird, auf überraschend einfache Art und Weise zumindest teilweise die Aufgabe eines Rest-Gas-Analysators übernehmen.

Die Liste von Gasarten kann eine Liste von reinen chemischen Substanzen, wie z.B. Stickstoff ($N_2$), Sauerstoff ($O_2$), Helium (He), Argon (Ar), Xenon (Xe), Kohlendioxid ($CO_2$), Wasserdampf ($H_2O$), etc. sein. Die Liste von Gasarten kann aber auch eine Liste von Gasgemischen umfassen. Beispielsweise können unterschiedliche Mischungsverhältnisse derselben Gase separate Einträge in der Liste mit je eigenen Kalibrierungsdaten haben. Eine solche Liste kann beispielsweise Einträge für 100% $N_2$, 90% $N_2$ + 10% Ar, 80% $N_2$ + 20% Ar, etc. umfassen. Je nach Empfindlichkeit der Kalibrierungsdaten auf die Gaskonzentrationen können auch 5%-, 2%-, 1%-Schritte etc. vorgesehen sein, um Kalibrierungsdaten bereitzustellen, welche die Gasartabhängigkeit ausreichend genau beschreiben. Die Liste von Gasarten kann Gruppen verschiedener chemischer Substanzen zu einem Listeneintrag zusammenfassen. Beispielsweise im Fall eines Pirani-Sensors können die Kalibrierungsdaten für Luft, Stickstoff und Sauerstoff gemeinsam behandelt werden. Beispielsweise kann die Liste von Gasarten auch durch eine Liste von Molekulargewichten definiert sein. Dabei werden chemische Substanzen mit demselben Molekulargewicht in einem einzigen Listeneintrag erfasst.

Im Sinne der vorliegenden Erfindung soll unter dem Begriff Liste von Gasarten auch eine verallgemeinerte Form einer Liste verstanden werden, bei welcher die Listeneinträge nicht anhand einer endlichen Anzahl von Listenindizes, sondern durch einen kontinuierlich verlaufenden Parameter bestimmt sind. Dieser Parameter kann beispielsweise ein Mischungsverhältnis von Gasen sein. Dieser Parameter kann als weiteres Beispiel ein mittleres Molekulargewicht sein. In diesem Fall sind über eine mathematische Formel oder über eine Interpolation von Tabellenwerten für jeden Wert des Parameters erste und zweite Kalibrierungsdaten in Funktion dieses kontinuierlichen Parameters definiert. Diese verallgemeinerte Form einer Liste von Gasarten spielt namentlich bei noch zu erwähnenden, auf Ausgleichsverfahren ("best fit") beruhenden Varianten des erfindungsgemässen Verfahrens eine Rolle.

Die Kalibrierungsdaten können beispielsweise gemessene Daten sein. Die Kalibrierungsdaten können alternativ auch durch theoretische Eigenschaften des Drucksensors abgeleitet sein. Die Kalibrierungsdaten können beispielsweise auf einer Computersimulation, insbesondere unter Berücksichtigung der geometrischen Formen und Abmessungen des jeweiligen Drucksensors, basiert sein. Ausführungsformen des Verfahrens ergeben sich aus den Merkmalen der abhängigen Ansprüche 2 bis 11.

Eine Variante des Verfahrens umfasst den zusätzlichen Schritt

d) Bestimmen eines Resultat-Drucks in Funktion des erfassten ersten Messwerts und der ersten Kalibrierungsdaten für die Resultat-Gasart und/oder in Funktion des erfassten zweiten Messwerts und der zweiten Kalibrierungsdaten für die Resultat-Gasart.

Die Erfinder haben erkannt, dass, basierend auf der zuvor ermittelten Information über den vorhandenen Gastyp, eine hohe Messgenauigkeit über den gesamten Druckmessbereich erreicht werden, der als zusammengesetzter Druckmessbereich mindestens zweier Drucksensoren der Gruppe entsteht. Die Unsicherheit des ermittelten Drucks die aus dem mangelnden Wissen über die im Messvolumen vorhandene Gasart entsteht, wird in dieser Variante des Verfahrens verkleinert oder verschwindet idealweise sogar ganz. In dieser Variante wird also zusätzlich ein gasartunabhängiger Resultat-Druck bestimmt.

In einer Variante des Verfahrens sind der erste und der zweite Drucksensor Vakuumdrucksensoren.

Vakuumdrucksensoren profitieren besonders stark von der erfindungsgemässen Methode, denn je niedriger ein zu messender Druck ist, desto eher muss auf eine indirekte Druckmessmethode zugegriffen werden, welche eine Gasartabhängigkeit zeigt.

In einer Variante des Verfahrens ist der erste Drucksensor ein Pirani-Sensor.

Pirani-Sensoren haben eine typische Gasartabhängigkeit, welche z.B. bei einem auf Stickstoff als Referenzgas kalibrierten Sensor für beispielsweise für Wasserdampf einen um einen Faktor 2 zu hohen Messwert anzeigt und beispielsweise für das Edelgas Xenon einen um einen Faktor 3 zu niedrigen Messwert anzeigt. Ohne das erfindungsgemässe Verfahren ist dies ein Quelle grosser Messunsicherheit. Im Zusammenhang mit dem erfindungsgemässen Verfahren wird diese Gasartabhängigkeit zu einer nützlichen Informationsquelle.

In einer Variante des Verfahrens ist der zweite Drucksensor ein Heisskathoden-Ionisationsvakuummeter. Insbesondere kommt eine Heisskathoden-Ionisationsvakuummeter des Bayard-Alpert Typs in Frage. Für dieses Messprinzip zeigt ein auf Stickstoff geeichter Sensor bei Wasserstoff einen um den Faktor 2.4 zu tiefen Druck, während er im Fall von Xenon einen 2.5 mal zu hohen Druck ausgibt.

Diese Variante kann insbesondere mit einer Variante kombiniert werden, welche als ersten Drucksensor einen Pirani-Sensor verwendet. Die gänzlich verschiedenen Druckmessprinzipien der beiden Sensoren ergänzt sich ideal, da sich ihre Gasartabhängigkeiten stark unterscheiden. Eine Aenderung der Gasart im gemeinsamen Messvolumen manifestiert sich in ausgeprägter Weise in einer Abweichung der beiden ausgegebenen Drucke von z.B. auf N2 kalibrierten Pirani- und Heisskathoden Sensor. Im Falle von Xenon etwa zeigt ein auf N2 geeichter Piranisensor einen um den Faktor 3 zu tiefen Wert an, während der auf N2 geeichte Heisskathodensensor einen um den Faktor 2.5 zu hohen Wert ausgibt.

In einer Variante des Verfahrens ist der zweite Drucksensor ein Kaltkathoden-Ionisationsvakuummeter. Das Kaltkathoden-Ionisationsvakuummeter kann dabei insbesondere ein invertiertes Magnetron sein.

Auch diese Variante funktioniert gut zusammen mit einem Pirani-Sensor als erstem Drucksensor.

In einer Variante des Verfahrens sind die ersten und zweiten gasartspezifischen Kalibrierungsdaten je durch einen ersten resp. zweiten Faktor definiert, mit dem das erste Mess-Signal respektive das zweite Mess-Signal zu multiplizieren ist, um den effektiven Druck zu erhalten.

Es gilt also beispielsweise für das Mess-Signal $p_1$ des ersten Sensors und das i'te Gas $G_i$ die Formel für den effektiven Druck

$$p_{eff} = C_1[G_i] \ p_1$$

und für das Mess-Signal $p_2$ zweiten Sensors

$$p_{eff} = C_2[G_i] \ p_2 \ .$$

Eine Tabelle mit konkreten Faktoren für eine Liste von Gasarten und für die Drucksensortypen Pirani und Kaltkathode ist weiter unten angegeben.

In einer Variante des Verfahrens wird eine Liste von Quotienten gebildet, indem zu jeder Gasart aus der Liste ein Quotient aus dem ersten Faktor für die jeweilige Gasart und dem zweiten Faktor für die jeweilige Gasart gebildet wird, wobei ein erfasster Quotient als Quotient des erfassten ersten Messwerts und des erfassten zweiten Messwerts gebildet wird, und wobei im Schritt c) "Bestimmen einer Resultat-Gasart" bestimmt wird, welchem der Quotienten aus der Liste von Quotienten der erfasste Quotient am nächsten kommt.

Das heisst eine Liste von Quotienten $Q[G_i]$ ist definiert als $Q[G_i] = C_1[G_i] / C_2[G_i]$ oder als dessen Kehrwert, für jedes i aus der Liste von Gasarten $G_i$.

Der erfasste Quotient wird berechnet aus den erfassten Messwerten $p_1$ (des ersten Drucksensors) und $p_2$ (des zweiten Drucksensors) als $Q = p_1 / p_2$.

Als $Q^*$ wird derjenige Quotient aus der Liste $Q[G_i]$ bestimmt, welcher am nächsten an Q liegt. Die zughörige Gasart ist dann die Resultat-Gasart $G^*$.

In einer Variante des Verfahrens wird im Schritt c) "Bestimmen einer Resultat-Gasart" zu jedem Gas aus der Liste der Gase ausgehend vom erfassten ersten Messwert basierend auf den ersten und zweiten gasartspezifischen Kalibrierungsdaten ermittelt, was für ein Wert für das zweite Mess-Signal erwartet wird, falls dieses Gas im gemeinsamen Messvolumen vorliegen würde. Die kleinste Abweichung dieses Werts vom erfassten zweiten Messwert wird als Kriterium für das Bestimmen der Resultat-Gasart verwendet.

Bei dieser Varianten kann beispielsweise aus einer endlichen Liste von Gasarten ausgewählt werden. Diese Variante eignet sich auch für die oben erwähnte verallgemeinerte Form einer Liste von Gasarten. Durch das Kriterium kleinste Abweichung des aus den Kalibrierungsdaten prognostizierten Werts für das zweite Mess-Signal vom erfassten zweiten Messwert ergibt sich die beste Wahl für den kontinuierlichen Parameter der Liste von Gasarten, also beispielsweise für den Wert eines Mischungsverhältnisses oder ein mittleres Molekulargewicht. Diese Wahl des kontinuierlichen Parameters definiert die Resultat-Gasart.

In einer Variante des Verfahrens werden bei sich bei änderndem Druck im gemeinsamen Messvolumen eine Mehrzahl von Paaren aus je einem ersten Messwert des ersten Drucksensors und einem zweiten Messwert des zweiten Drucksensors erfasst werden, wobei beim Bestimmen der Resultat-Gasart diejenige Gasart gewählt wird, welche am besten zur Kombination der erfassten Mehrzahl von Paaren passt.

Diese Variante des Verfahrens ist besonderes dann von Nutzen, wenn sich die Kalibrierungskurven unterschiedlicher Gase in ihrer Abhängigkeit vom effektiven Druck z.B. durch unterschiedliche Steigungen oder Krümmungen unterscheiden, welche allein mit einer Messung bei einem einzigen Druckwert nicht beobachtbar sind. Die Bedingung, dass sich der Druck im gemeinsamen Messvolumen ändert kann aktiv beispielsweise dadurch erreicht werden, dass eine Pumpe eingeschaltet wird oder ein Ventil zum Einlassen eines Gases ins gemeinsame Messvolumen geöffnet wird. Die Bedingung sich ändernder Druck kann aber alternativ auch erreicht werden durch kontinuierliches Beobachten z.B. eines Mess-Signals eines der Drucksensoren und Starten des Verfahrens, sobald eine ausreichend schnelle Druckänderungsrate beobachtet wird. Auf diese Weise können Messdaten aus einem genügend grossen Druckbereich erhoben werden, in dem sich die unterschiedlichen Verläufe von gasabhängigen Kalibrierungskurven in unterscheidbaren Messresultaten niederschlagen.

Auch in dieser Varianten kann mit einer Liste von Gasarten gearbeitet werden, bei welcher die Listeneinträge durch einen kontinuierlichen Parameter definiert sind. Dies kann die Genauigkeit des ermittelten Drucks noch weiter erhöhen, da nicht auf das am besten passende Gas aus einer Tabelle "gerundet" werden muss. Die Anpassung eines kontinuierlichen Parameters kann die effektiv im Messvolumen vorliegende Situation aus Gasgemischen besser abbilden.

In einer Variante des Verfahrens wird anhand des erfassten ersten Messwerts, anhand des erfassten zweiten Messwerts oder anhand des Resultat-Drucks überprüft, ob der im gemeinsamen Mess-Volumen vorliegende Druck im Überlapp-Druckmessbereich liegt und es werden der Resultat-Druck und/oder die Resultat-Gasart als ungültig verworfen, wenn dies nicht der Fall ist.

Falls der effektive Druck im gemeinsamen Messvolumen nicht einem Druck entspricht, der im Druckmessbereich beider Drucksensoren liegt, die für die Schritte des Verfahrens verwendet werden, so wird die ermittelte Resultat-Gasart und gegebenenfalls der Resultat-Druck nicht eine sinnvolle sein. Ob die vorgenannte Bedingung erfüllt ist, stellt sich möglicherweise erst dann heraus, wenn einige Schritte des Verfahrens schon ausgeführt sind. Die vorliegende Variante des Verfahrens sorgt auf einfache Weise für eine Qualitätssicherung.

Weiter betrifft die Erfindung auch eine Vorrichtung nach Anspruch 12. Es handelt sich um eine Vorrichtung zur Durchführung des erfindungsgemässen Verfahrens.

Die Vorrichtung umfasst eine Gruppe von Drucksensoren, welche derart angeordnet sind, dass sie den Druck in einem gemeinsamen Messvolumen messen können. Die Gruppe von Drucksensoren umfasst mindestens einen ersten Drucksensor mit einem ersten Druckmessbereich und einen zweiten Drucksensor mit einem zweiten Druckmessbereich, wobei der erste und der zweite Druckmessbereich in einem Überlapp-Druckmessbereich überlappen. Der erste Drucksensor beruht auf einem ersten indirekten Druckmessprinzip und der zweite Drucksensor beruht auf einem zweiten indirekten Druckmessprinzip. Die Vorrichtung umfasst weiter Mittel zur Speicherung von ersten Kalibrierungsdaten und von zweiten Kalibrierungsdaten. Zudem umfasst die Vorrichtung eine Steuereinheit, die mit einem ersten Mess-Signal-Ausgang des ersten Drucksensors, mit einem zweiten Mess-Signal-Ausgang des zweiten Drucksensors und mit den Mitteln zur Speicherung von ersten Kalibrierungsdaten und von zweiten Kalibrierungsdaten wirkverbunden ist zur Verarbeitung der Mess-Signale der Drucksensoren. Die Vorrichtung ist weiter eingerichtet zur Ausgabe der Resultat-Gasart. Die Vorrichtung ist alternativ weiter eingerichtet zum (vorab) Bestimmen der Resultat-Gasart und zum Bestimmen des Resultat-Drucks auf Basis der (zuvor bestimmten) Resultat-Gasart und zur Ausgabe des Resultat-Drucks. Bei dieser Alternative bleibt die Resultat-Gasart ein internes Resultat und es wird nur der Resultat-Druck über eine Schnittstelle ausgegeben. Damit verhält sich die Vorrichtung von aussen betrachtet wie ein einziger Drucksensor, welcher unabhängig von der Gasart im Messvolumen ein genaues Messresultat für den Druck liefert.

Weiter im Rahmen der Erfindung liegt ein Computerprogramm-Produkt gemäss Anspruch 13. Das Computerprogramm-Produkt umfasst Befehle, die bei der Ausführung der Befehle durch eine Steuereinheit einer erfindungsgemässen Vorrichtung die Steuereinheit dazu veranlassen, die Schritte des erfindungsgemässen Verfahrens respektive einer der Varianten des Verfahrens durchzuführen.

Im Folgenden wird ein Beispiel anhand einer Gruppe von Drucksensoren mit einem Pirani-Sensor als erstem Drucksensor (Kalibrierungsdaten in Form des Faktors C1) und mit einem Heisskathoden-Ionisationsvakuummeter (Kalibrierungsdaten in Form des Faktors C2) als zweitem Drucksensor mit konkreter Kalibrierungsdaten, welche in diesem Fall als Faktoren vorliegen, erläutert.

Es gilt im Druckbereich von $5*10E-2$ bis $5*10E-4$ mbar in guter Näherung

$$p_{eff} = C_1[G_i] * p_1$$

für Drucksensor 1 und

$$p_{eff} = C_2[G_i] * p_2$$

für Drucksensor 2, wobei entsprechend dem Gas $G_i$ die jeweilige Zeile der untenstehenden Tabelle zu abzulesen ist. Dieser Druckbereich liegt auch im Überlapp-Druckmessbereich der beiden Drucksensoren. Die Tabelle gilt für Stickstoff N2 als Referenzgas, sodass für Stickstoff der gasartabhängige Faktor 1 ist. Luft (air) und Sauerstoff (O2) verhalten sich für die hier gewählten Sensoren praktisch identisch wie das Referenzgas N2 und sind deshalb in einer Zeile der Tabelle aufgelistet.

| Gas | C1 | C2 | Q=C2/C1 | 1/Q=C1/C2 |
|---|---|---|---|---|
| He | 0.8 | 5.9 | 7.38 | 0.14 |
| Ne | 1.4 | 4.1 | 2.93 | 0.34 |
| Ar | 1.7 | 0.8 | 0.47 | 2.13 |
| Kr | 2.4 | 0.5 | 0.21 | 4.80 |
| Xe | 3.0 | 0.4 | 0.13 | 7.50 |
| H2 | 0.5 | 2.4 | 4.80 | 0.21 |
| air, O2, N2 | 1 | 1 | 1.00 | 1.00 |
| CO2 | 0.9 | 0.70 | 0.78 | 1.28 |
| H2O | 0.5 | 0.89 | 1.79 | 0.56 |

Liegt nun der effektive Druck $p_{eff}$ im gemeinsamen Messvolumen der beiden Drucksensoren im Gültigkeitsbereich der Kalibration durch je einen gasabhängigen Faktor gemäss Tabelle, so liefert der erste Drucksensor den Messwert $p_1 = p_{eff}/C_1$ und der zweite Drucksensor liefert den Messwert $p_2 = p_{eff}/C_2$. Der Quotient der beiden Messwerte beträgt also

$$p_1/p_2 = (C_2 * p_{eff})/(C_1 * p_{eff}) = C_2/C_1 \,,$$

unabhängig davon, was der exakte Werte von $p_{eff}$ ist. Der Überlapp-Druckmessbereich resp. Gültigkeitsbereich der Näherung erstreckt sich in diesem Beispiel über zwei Dekaden.

Ermittelt man also beispielsweise für den Quotienten $p_1/p_2$ einen Wert von über 7, so passt innerhalb der Liste der Gase in der obigen Tabelle das Gas Helium (He) am besten (Tabellenwert für Q[He] = 7.38), während der am zweitbesten passende Wert (Q[H2] = 4.80) bereits relativ weit weg liegt. Im Schritt c) des erfindungsgemässen Verfahrens würde in diesem Fall also Helium als Resultat-Gasart bestimmt. Im Schritt d) der Variante des Verfahrens kann nun mit den Faktoren zum Gas Helium, also der Resultat-Gasart, der Resultat Druck p* bestimmt werden, z.B. durch die Formel

$$p^* = C_1[He] * p_1 = 0.8 * p_1 \,.$$

Alternativ kann die Formel

$$p^* = C_2[He] * p_2 = 5.9 * p_2$$

angewendet werden, oder es kann ein Mittelwert basierend auf Messwerten beider Drucksensoren beispielsweise als

$$p^* = (C_1[He] * p_1 + C_2[He] * p_2)/2$$

bestimmt werden.

Ausführungsbeispiele der vorliegenden Erfindung werden nachstehend anhand von Figuren noch näher erläutert. Es zeigen

Fig. 1 schematisch eine Vorrichtung zur Durchführung des Verfahrens;
Fig. 2 ein Flussdiagramm des erfindungsgemässen Verfahrens;
Fig. 3 schematisch mögliche relative Lagen von erstem und zweitem Druckmessbereich und resultierendem Überlapp-Druckmessbereich;
Fig. 4 zeigt in einer doppelt-logarithmischen Darstellung die Abhängigkeit eines mittels Pirani-Sensors bestimmten Drucks von der Gasart;
Fig. 5 zeigt schematisch erste und zweite gasabhängige Kalibrierungskurven.

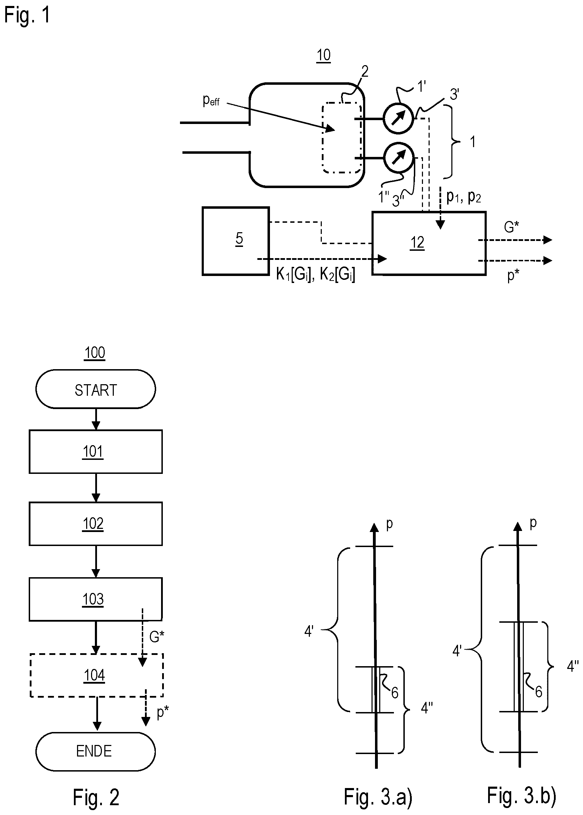

In Figur 1 ist schematisch eine beispielhafte Vorrichtung 10 zur Durchführung des Verfahrens gezeigt. Die Vorrichtung umfasst eine Gruppe 1 von Drucksensoren, mit mindestens einem ersten Drucksensor 1' und einem zweiten Drucksensor 1", welche Drücke in einem gemeinsamen Messvolumen 2 messen können. Das Messvolumen 2 kann insbesondere ein Teilvolumen einer Vakuumkammer sein, wie schematisch durch den strichpunktiert umrandeten Bereich angedeutet ist. Der erste Drucksensor 1' ist dazu eingerichtet, ein erstes Mess-Signal $p_1$ aus einem ersten Mess-Signal-Ausgang 3' an eine Steuereinheit 12 weiterzuleiten. Der zweite Drucksensor 1'' ist dazu eingerichtet ein zweites Mess-Signal $p_2$ aus einem zweiten Mess-Signal-Ausgang 3'' an die Steuereinheit 12 weiterzuleiten. Die mit gestrichelten Linien eingezeichneten Wirkverbindungen können beispielsweise drahtgebunden umgesetzt sein, sie können beispielsweise auch über Funksignale (Bluetooth, etc.) oder optische Signalübertragung verwirklicht sein. Gestrichelt gezeichnete Pfeile zeigen den Informationsfluss zwischen den Elementen der Vorrichtung. Die Vorrichtung umfasst Mittel 5 zur Speicherung von gasabhängigen Kalibrierungsdaten, welche an die Steuereinheit übermittelt werden können. Eine Resultat-Gasart G* und ein Resultat-Druck p* können von der Steuereinheit ausgegeben werden.

Die Teile der gezeigten Vorrichtung oder die komplette Vorrichtung kann in einem gemeinsamen Gehäuse eingebaut sein. Insbesondere kann die Gruppe der Drucksensoren und die Steuereinheit in einem gemeinsamen Gehäuse zu einer Drucksensor-Einheit kombiniert sein. Zusätzlich kann gegebenenfalls ein Mittel zur Speicherung der Kalibrierungsdaten im gemeinsamen Gehäuse untergebracht sein.

In Figur 2 ist ein Flussdiagramm des erfindungsgemässen Verfahrens 100 gezeigt. Das Verfahren umfasst die Schritte

a) Bereitstellen 101 von gasartspezifischen ersten Kalibrierungsdaten $K_1[G_i]$ für das erste Mess-Signal und von gasartspezifischen zweiten Kalibrierungsdaten $K_2[G_i]$ für das zweite Mess-Signal, wobei die ersten und zweiten Kalibrierungsdaten eine Abhängigkeit des ersten respektive zweiten Mess-Signals vom effektiven Drucks $p_{eff}$ und von einer Gasart im gemeinsamen Messvolumen für eine Liste von Gasarten umfassend mindestens eine erste Gasart $G_1$, die verschieden ist vom Referenzgas, beschreiben;

b) im Wesentlichen gleichzeitiges Erfassen 102 eines ersten Messwerts $p_1$ des ersten Mess-Signals und Erfassen eines zweiten Messwerts $p_2$ des zweiten Mess-Signals im Überlapp-Druckmessbereich;

c) Bestimmen 103 einer Resultat-Gasart G* als diejenige Gasart in der Liste von Gasarten, welche unter Berücksichtigung der ersten und zweiten Kalibrierungsdaten am besten zur Kombination des erfassten ersten Messwerts $p_1$ und des erfassten zweiten Messwerts passt $p_2$.

Die Schritte 101, 102 und 103 werden sequenziell durchgeführt, wobei vor dem Beginn (START) des Verfahrens bereits die notwendigen Kalibrierungsdaten zur Verfügung gestellt sind. Am Ende (ENDE) des Verfahrens ist das Resultat-Gas G* bekannt.

Durch ein gestrichelt eingezeichnetes Rechteck wird der optionale Schritt d) dargestellt, welcher, wenn zusätzlich ausgeführt, zu einer Variante des Verfahrens führt, welche ausserdem einen Resultat-Druck als Ausgabe liefert. Mit diesem zusätzlichen Schritt ist am Ende des Verfahrens auch der Resultat-Druck p* bekannt.

Bei dem zusätzlichen Schritt d) handelt es sich um ein Bestimmen 104 eines Resultat-Drucks p* in Funktion des erfassten ersten Messwerts $p_1$ und der ersten Kalibrierungsdaten für die Resultat-Gasart und/oder in Funktion des erfassten zweiten Messwerts $p_2$ und der zweiten Kalibrierungsdaten für die Resultat-Gasart. Auf Basis der aus Schritt c) bekannten Resultat-Gasart dient also der entsprechende Satz von Kalibrationsdaten dazu, die Messwerte der Drucksensoren in den gasartunabhängigen effektiven Druck zu übersetzen.

Figur 3 zeigen in Fig. 3.a) und in Fig. 3.b) schematisch zwei Möglichkeiten der relativen Lage von erstem 4' und zweitem 4'' Druck-Messbereich des ersten 1' resp. zweiten 1" Drucksensors der Gruppe von Drucksensoren auf einer Druck-Achse p. Die Druck-Achse p ist hier schematisch zu verstehen, es könnte sich beispielsweise um eine lineare Achse oder auch um eine logarithmische Achse handeln. Hohe Drücke sind auf der Achse weiter oben eingezeichnet als niedrigere Drücke. Ein Überlapp-Druck-Messbereich 6 existiert, in welchem der erste 4' und der zweite 4'' Druck-Messbereich überlappen. Das Auslesen des ersten und zweiten Mess-Signals im Schritt a) des Verfahrens findet statt, während der Druck im gemeinsamen Messvolumen in diesem Überlapp-Druck-Messbereich 6 liegt. In Fig. 3.b) ist der Fall gezeigt, in welchem der zweite Druck-Messbereich 4'' komplett innerhalb des ersten Druck-Messbereichs 4' liegt, sodass der Überlapp-Druckmessbereich identisch mit dem zweiten Druck-Messbereich 4' ist.

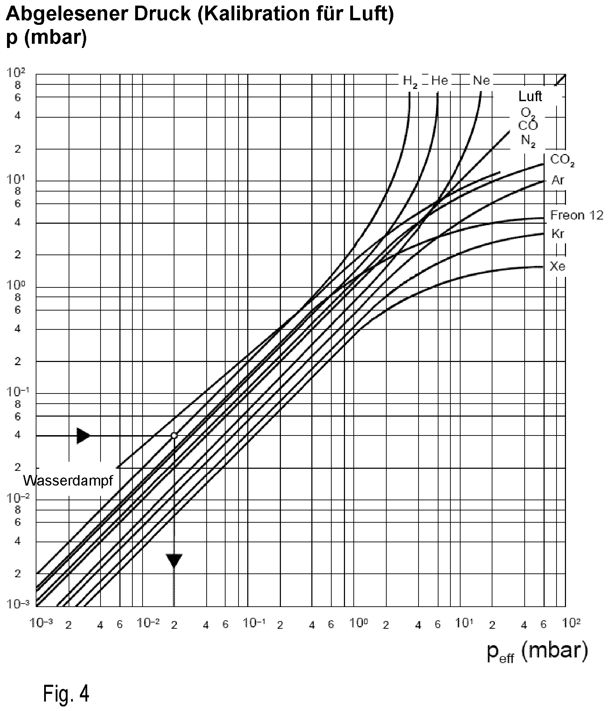

Figur 4 zeigt in einer doppelt-logarithmischen Darstellung die Abhängigkeit eines mittels eines Pirani-Sensors bestimmten Drucks von einer bestimmten Gasart. In horizontaler Richtung ist der "effektive" Druck $p_{eff}$ eingezeichnet. In vertikaler Richtung ist der an einem Pirani-Sensor abgelesene Druck p (mbar) in Abhängigkeit vom effektiven Druck $p_{eff}$

(mbar) für verschiedene Gasarten je mit einer separaten Kurve aufgetragen, siehe die Beschriftung zu jeder Kurve im Bereich oben rechts der Grafik. Der gezeigte Druckbereich reicht auf beiden Achsen von $10^{-3}$ mbar bis $10^2$ mbar, d.h. über 5 Grössenordnungen. Der Pirani-Sensor ist in diesem Fall so kalibriert, dass er für die Gasart Luft den Druck $p_{eff}$ anzeigt, d.h. die Druckkurve zu Luft (Air) ist im doppelt-logarithmischen Plot eine gerade Linie auf der Diagonalen. Jeder der gezeigten Kurven ist also eine gasartabhängige Kalibrierungskurve. Der erste Drucksensor kann beispielsweise ein Pirani-Sensor sein, sodass die in Fig. 4 gezeigte Kurvenschar die gasartspezifischen ersten Kalibrierungsdaten darstellen können.

In einem Druckbereich unterhalb von ca. 1 mbar kann der Effekt der Gasart durch einen Faktor zwischen $p_{eff}$ und dem mit dem Pirani-Sensor gemessenen Druck p beschrieben werden, welcher sich im doppelt-logarithmischen Diagramm als Versatz der Kurven zeigt. Wie die Erfinder erkannt haben, kann die wesentliche Information dieser Kalibrierungskurven in über ca. zwei Dekaden durch den genannten Faktor bereits ausreichend genau beschrieben werden, sodass eine Tabelle mit den entsprechenden Faktoren eine sehr speichersparende Form von gasartspezifischen ersten Kalibrierungsdaten darstellt.

Analog können zweite Kalibrierungsdaten für den zweiten Drucksensor als Kurvenschar oder als Tabelle von Faktoren zur Verfügung gestellt werden.

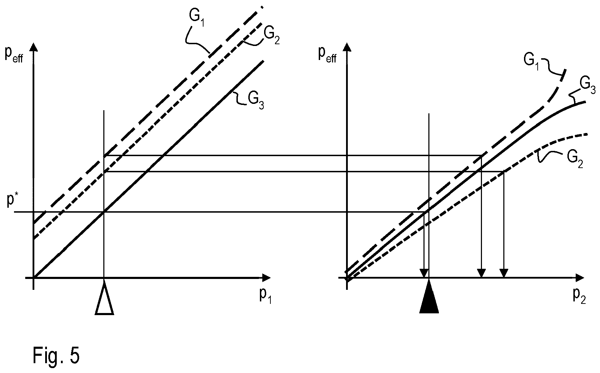

Figur 5 zeigt beispielhaft und schematisch Kalibrierungskurven für drei Gase, für Gas G1 (durchgezogene Linie), für Gas G2 (gestrichelt mit kurzen Strichen) und Gas G3 (gestrichelt mit langen Strichen). In der linken Hälfte sind die Kalibrierungskurven für einen ersten Drucksensor in Abhängigkeit des ersten Mess-Signals $p_1$ gezeigt. In der rechten Hälfte sind die Kalibrierungskurven für einen zweiten Drucksensor in Abhängigkeit des zweiten Mess-Signals $p_2$ gezeigt. Auf die senkrechte Achse ist der dem jeweiligen Mess-Signal entsprechende effektive Druck $p_{eff}$ abgetragen, wobei eine bestimmte vertikale Position im linken Diagramm demselben effektiven Druck entspricht, wie im rechten Diagramm. Die Kalibrierungskurven sind als illustrative Beispiele zu verstehen, welche das der Erfindung zugrunde liegende Prinzip verdeutlichen. Die Diagramme können beispielsweise doppelt-logarithmische Darstellungen sein. Die Gasartabhängigkeit des ersten Sensors unterscheidet sich von der Gasartabhängigkeit des zweiten Sensors. Beim zweiten Drucksensor sind Variationen in Steigung und Krümmung der Kurven erkennbar, welche bei den Kalibrierungskurven des ersten Sensors in diesem Beispiel nicht ausgeprägt sind.

Ein weisses Dreieck zeigt das ermittelte erste Mess-Signal des ersten Drucksensors auf der $p_1$-Achse an. Gleichzeitig wurde vom zweiten Drucksensor der als schwarzes Dreieck auf $p_2$-Achse angezeigte zweite Mess-Signal ermittelt. Mit Hilfslinien ausgehend vom weissen Dreieck wird angezeigt, welchen effektiven Druck man je nach Gasart im gemeinsamen Messvolumen erwarten würde und welches zweite Mess-Signal bei diesem effektiven Druck zu erwarten wäre. Gas $G_3$ passt am besten zu den tatsächlich gemessen Werten, daher wird Gas $G_3$ als Resultat-Gas G* festgelegt. Das Kriterium dafür kann z.B. Abstand auf der - gegebenenfalls logarithmischen - $p_2$-Achse sein. Auf der Kalibrierungs-kurve für G* = $G_3$ kann nun der Resultat-Druck p* auf der $p_{eff}$-Achse abgelesen werden.

Im Fall, dass mehrere solche Paare von erstem und zweitem Mess-Signal verglichen werden sollen, ist beispielsweise eine Summe von quadrierten Abständen ein geeignetes Kriterium, um das am besten passende Gas zu bestimmen. Die Rolle von erstem und zweitem Mess-Signal kann insofern vertauscht werden, als dass auch ausgehend vom tatsächlich gemessenen zweiten Mess-Signal erwartete Mess-Signale auf der $p_1$-Achse bestimmt werden und dort - alternativ oder zusätzlich - der Abstand vom gemessenen ersten Mess-Signal als Kriterium für das am besten passende Gas bestimmt werden.

Das erfindungsgemässe Verfahren und alle seine Ausführungsformen können mit einem zusätzlichen Schritt des Nullens mindestens eines der Drucksensoren kombiniert werden. Bei verschiedenen Typen von Drucksensoren unterliegt das für einen bestimmten effektiven Druck generierte Mess-Signal einem zeitlichen Drift. Dieser Effekt kann durch Nullen eliminiert werden, was die Genauigkeit des erfindungsgemässen Verfahrens weiter erhöht. Das Nullpunkt Mess-Signal wird dabei bevorzugterweise bei einem effektiven Druck bestimmt, welche mindestens eine bis zwei Dekaden unterhalb des Messbereichs des zu nullenden Drucksensors liegt. Das Überprüfen, ob ein genügend niedriger Druck vorliegt kann auf verschiedene Weisen erfolgen. Beispielsweise kann zum Nullen eines Pirani-Sensors das Erreichen eines ausreichend tiefen Drucks mit einem Ionisations-Vakuummeter, dessen Druck-Messbereich bis mindestens zwei Dekaden unter den Messbereich des Pirani-Sensors reicht, überprüft werden. Als weiteres Beispiel kann beim Nullen eines Ionisations-Vakuummeters des Bayard-Alpert-Typs das Erreichen eines genügend tiefen Drucks durch ein Ionisations-Vakuummeter des Extraktor-Typs überprüft werden. Das Erreichen eines genügend tiefen Drucks für das Nullen eines Drucksensors kann beispielsweise auch durch geeignete Verfahrensschritte, wie durch langes Abpumpen des gemeinsamen Messvolumen erreicht werden. Das Erreichen eines genügend tiefen Drucks kann alternativ auch aus Betriebsparametern einer mit dem gemeinsamen Messvolumen der Drucksensoren wirkverbundenen Vakuumpumpe abgeleitet werden.

Hierbei ist zu beachten, dass es sich bei der Drift des Drucksensors und bei der Gasartabhängigkeit um zwei separate Phänomene handelt. So bleibt beispielsweise auch bei einem nach jedem Wechseln der Gasart immer wieder neu genulltem Druck-Sensor eine Gasartabhängigkeit bestehen.

Zurückkommend auf die Art und Weise, wie eine Liste von Gasarten, welche eine Liste von Gasgemischen umfassen kann, gehandhabt werden kann, werden folgende illustrative Beispiele genannt. Beispielsweise im Fall eines Pirani-Sensors geht es darum, die Beiträge der Wärmeleitung jeder Komponente des Gasgemischs zur gesamten Wärmeleitung zusammenzufassen. Beispielsweise gibt Jousten mit Formel 11 aus der Publikation

K. Jousten, On the gas species dependence of Pirani vacuum gauges, Vac. Sci. Technol. A 26, 3, May/Jun 2008

eine Formel an, welche effektive Akkommodationskoeffizienten und Wärmekapazitäten jeder an einer Mischung beteiligten Gasspezies berücksichtigt. Alternativ, ebenfalls geeignet für Pirani-Sensoren, gibt Setiawan mit Formeln 17 und 18 aus der Publikation

Ikhsan Setiawan et al., Critical Temperature Differences of a Standing Wave Thermoacoustic Prime Mover with Various Helium-Based Binary Mixture Working Gases, 2015 J. Phys.: Conf. Ser. 622 012010

eine Formel an, welche basierend auf dem Gasanteil, auf den Wärmeleitfähigkeiten und molaren Massen jeder beteiligten Gasspezies die Wärmeleitfähigkeit des Gasgemischs angibt. Beide genannten Formeln sind dazu geeignet, eine Tabelle von Gasarten in Form von Gasgemischen zu erzeugen, oder auch um einen Anteil eines oder mehrerer Gasspezies als kontinuierlichen Parameter zu verwenden. Letzteres ist für die "best fit" Verfahren wie oben beschrieben von Vorteil.

Ein ähnliches, allerdings etwas aufwändigeres Vorgehen ist bei Ionisationsvakuummetern möglich. Hier sind für die Voraussage eines Ionenstroms die Energieverteilung der Elektronen, das Ionisierungspotential der Gase, die Fragmentation der Gase und etwaige Rekombination als mögliche Einflussgrössen von Bedeutung. Kennt man die Sensitivität S, welche als Verhältnis von Ionenstrom am Ionenkollektor einerseits und Elektronenemissionsstrom und Druck andererseits definiert ist, aus experimentellen Daten oder Simulationen, so kann der kombinierte Ionenstrom als die mit Partialdrücken der beteiligten Gasspezies gewichtete Summe ermittelt werden. Drücke und Partialdrücke werden dabei als Differenz zum Residualdruck, Kollektorströme als Differenz zum Kollektorstrom beim Residualdruck berücksichtigt.

Bezugszeichenliste

1 Gruppe von Drucksensoren
1' erster Drucksensor
1" zweiter Drucksensor
2 gemeinsames Messvolumen
3' erster Mess-Signal-Ausgang
3'' zweiter Mess-Signal-Ausgang
4' erster Druckmessbereich
4'' zweiter Druckmessbereich
5 Mittel zur Speicherung von Kalibrierungsdaten
6 Überlapp-Druckmessbereich
12 Steuereinheit
G* Resultat-Gasart
$p_1$ erstes Mess-Signal
$P_2$ zweites Mess-Signal
$p_{eff}$ effektiver Druck
p* Resultat-Druck
100 Verfahren
101 Schritt a) Bereitstellen von Kalibrierungsdaten
102 Schritt b) Erfassen des ersten und zweiten Mess-Signals
103 Schritt c) Bestimmen der Resultat-Gasart
104 Schritt d) Bestimmen des Resultat-Drucks
START Beginn des Verfahrens
ENDE Ende des Verfahrens

**Patentansprüche**

1. Verfahren zum Betrieb einer Gruppe (1) von Drucksensoren (1', 1''), welche derart angeordnet sind, dass sie den Druck in einem gemeinsamen Messvolumen (2) messen können,

   wobei die Gruppe von Drucksensoren mindestens einen ersten Drucksensor (1') mit einem ersten Druckmessbereich (4') und einen zweiten Drucksensor (1'') mit einem zweiten Druckmessbereich (4'') umfasst, wobei der erste und der zweite Druckmessbereich in einem Überlapp-Druckmessbereich (6) überlappen,
   wobei der erste Drucksensor (1') auf einem ersten indirekten Druckmessprinzip beruht und eingerichtet ist zur Ausgabe eines auf ein Referenzgas ($G_{ref}$) kalibrierten ersten Mess-Signals, wobei der zweite Drucksensor (1'') auf einem zweiten indirekten Druckmessprinzip beruht und eingerichtet ist zur Ausgabe eines auf das Referenzgas kalibrierten zweiten Mess-Signals,
   **dadurch gekennzeichnet, dass** das Verfahren die Schritte umfasst:

   a) Bereitstellen (101) von gasartspezifischen ersten Kalibrierungsdaten ($K_1[G_i]$) für das erste Mess-Signal und von gasartspezifischen zweiten Kalibrierungsdaten ($K_2[G_i]$) für das zweite Mess-Signal, wobei die ersten und zweiten Kalibrierungsdaten eine Abhängigkeit des ersten respektive zweiten Mess-Signals vom effektiven Drucks ($p_{eff}$) und von einer Gasart im gemeinsamen Messvolumen für eine Liste von Gasarten umfassend mindestens eine erste Gasart ($G_1$), die verschieden ist vom Referenzgas, beschreiben;
   b) im Wesentlichen gleichzeitiges Erfassen (102) eines ersten Messwerts ($p_1$) des ersten Mess-Signals und Erfassen eines zweiten Messwerts ($p_2$) des zweiten Mess-Signals;
   c) Bestimmen (103) einer Resultat-Gasart ($G^*$) als diejenige Gasart in der Liste von Gasarten, welche unter Berücksichtigung der ersten und zweiten Kalibrierungsdaten am besten zur Kombination des erfassten ersten Messwerts ($p_1$) und des erfassten zweiten Messwerts passt ($p_2$).

2. Verfahren nach Anspruch 1 umfassend den zusätzlichen Schritt
   d) Bestimmen (104) eines Resultat-Drucks ($p^*$) in Funktion des erfassten ersten Messwerts ($p_1$) und der ersten Kalibrierungsdaten für die Resultat-Gasart und/oder in Funktion des erfassten zweiten Messwerts ($p_2$) und der zweiten Kalibrierungsdaten für die Resultat-Gasart.

3. Verfahren nach einem der Ansprüche 1 oder 2, wobei der erste und der zweite Drucksensor Vakuumdrucksensoren sind.

4. Verfahren nach einem der Ansprüche 1 bis 3, wobei der erste Drucksensor (1') ein Pirani-Sensor ist.

5. Verfahren nach einem der Ansprüche 1 bis 4, wobei der zweite Drucksensor (1'') ein Heisskathoden-Ionisationsvakuummeter, insbesondere des Bayard-Alpert Typs, ist.

6. Verfahren nach einem der Ansprüche 1 bis 5, wobei der zweite Drucksensor (1'') ein Kaltkathoden-Ionisationsvakuummeter, insbesondere ein invertiertes Magnetron, ist.

7. Verfahren nach einem der Ansprüche 1 bis 6, wobei die ersten und zweiten gasartspezifischen Kalibrierungsdaten ($K_1[G_i]$, $K_2[G_i]$) je durch einen ersten resp. zweiten Faktor ($C_1[G_i]$, $C_2[G_i]$) definiert sind, mit dem das erste Mess-Signal respektive das zweite Mess-Signal zu multiplizieren ist, um den effektiven Druck zu erhalten.

8. Verfahren nach Anspruch 7, wobei eine Liste von Quotienten gebildet wird, indem zu jeder Gasart aus der Liste ein Quotient ($Q[G_i]$) aus dem ersten Faktor für die jeweilige Gasart und dem zweiten Faktor für die jeweilige Gasart gebildet wird, wobei ein erfasster Quotient ($Q$) als Quotient des erfassten ersten Messwerts ($p_1$) und des erfassten zweiten Messwerts ($p_2$) gebildet wird, und wobei im Schritt c) bestimmt wird, welchem der Quotienten ($Q^*$) aus der Liste von Quotienten der erfasste Quotient am nächsten kommt.

9. Verfahren nach einem der Ansprüche 1 bis 8, wobei im Schritt c) zu jedem Gas aus der Liste der Gase ausgehend vom erfassten ersten Messwert ($p_1$) basierend auf den ersten und zweiten gasartspezifischen Kalibrierungsdaten ermittelt wird, was für ein Wert für das zweite Mess-Signal erwartet wird, falls dieses Gas im gemeinsamen Messvolumen vorliegen würde, und wobei die kleinste Abweichung dieses Werts vom erfassten zweiten Messwert ($p_2$) als Kriterium für das Bestimmen der Resultat-Gasart verwendet wird.

10. Verfahren nach einem der Ansprüche 1 bis 9, wobei bei sich bei änderndem Druck im gemeinsamen Messvolumen eine Mehrzahl von Paaren aus je einem ersten Messwert des ersten Drucksensors und einem zweiten Messwert des zweiten Drucksensors erfasst werden, wobei beim Bestimmen der Resultat-Gasart (G*) diejenige Gasart gewählt wird, welche am besten zur Kombination der erfassten Mehrzahl von Paaren passt.

11. Verfahren nach einem der Ansprüche 1 bis 10, wobei anhand des erfassten ersten Messwerts ($p_1$), anhand des erfassten zweiten Messwerts ($p_2$) oder anhand des Resultat-Drucks ($p*$) überprüft wird, ob der im gemeinsamen Mess-Volumen vorliegende Druck im Überlapp-Druckmessbereich liegt und wobei der Resultat-Druck und/oder die Resultat-Gasart als ungültig verworfen werden, wenn dies nicht der Fall ist.

12. Vorrichtung (10) eingerichtet zur Durchführung des Verfahrens gemäss einem der Ansprüche 1 bis 11, wobei die Vorrichtung

eine Gruppe (1) von Drucksensoren umfasst, welche derart angeordnet sind, dass sie den Druck in einem gemeinsamen Messvolumen (2) messen können, wobei die Gruppe von Drucksensoren mindestens einen ersten Drucksensor (1') mit einem ersten Druckmessbereich (4') und einen zweiten Drucksensor (1'') mit einem zweiten Druckmessbereich (4'') umfasst, wobei der erste und der zweite Druckmessbereich in einem Überlapp-Druckmessbereich (6) überlappen,
wobei der erste Drucksensor (1') auf einem ersten indirekten Druckmessprinzip beruht und der zweite Drucksensor (1'') auf einem zweiten indirekten Druckmessprinzip beruht und wobei die Vorrichtung Mittel (5) zur Speicherung von ersten Kalibrierungsdaten und von zweiten Kalibrierungsdaten umfasst, wobei die Vorrichtung (10) eine Steuereinheit (12) umfasst, die mit einem ersten Mess-Signal-Ausgang (3') des ersten Drucksensors, mit einem zweiten Mess-Signal-Ausgang (3'') des zweiten Drucksensors und mit den Mitteln (5) zur Speicherung von ersten Kalibrierungsdaten und von zweiten Kalibrierungsdaten wirkverbunden ist zur Verarbeitung der Mess-Signale der Drucksensoren, **dadurch gekennzeichnet, dass** die Steuereinheit (12) eingerichtet ist:

i) zur Ausgabe der Resultat-Gasart,
und/oder
ii) zum Bestimmen der Resultat-Gasart und zum Bestimmen des Resultat-Drucks auf Basis der Resultat-Gasart und zur Ausgabe des Resultat-Drucks.

13. Computerprogramm-Produkt umfassend Befehle, die bei der Ausführung der Befehle durch eine Steuereinheit (12) einer Vorrichtung (10) nach Anspruch 12 die Steuereinheit dazu veranlassen, die Schritte eines Verfahrens (100) gemäss einem der Ansprüche 1 bis 11 durchzuführen.

**Claims**

1. Method for operating a group (1) of pressure sensors (1', 1'') which are arranged to measure the pressure in a common measurement volume (2),

wherein the group of pressure sensors comprises at least a first pressure sensor (1') having a first pressure measurement range (4') and a second pressure sensor (1'') having a second pressure measurement range (4''), wherein the first and second pressure measurement ranges overlap in an overlap pressure measurement range (6),
wherein the first pressure sensor (1') is based on a first indirect pressure measurement principle and is adapted to output a first measurement signal calibrated to a reference gas ($G_{ref}$), wherein the second pressure sensor (1'') is based on a second indirect pressure measurement principle and is adapted to output a second measurement signal calibrated to the reference gas,
**characterized in that** the method comprises the steps of:

a) providing (101) gas-type-specific first calibration data ($K_1[G_i]$) for the first measurement signal and gas-type-specific second calibration data ($K_2[G_i]$) for the second measurement signal, wherein the first and second calibration data describe a dependence of the first and second measurement signals, respectively, on the effective pressure ($p_{eff}$) and on a gas type in the common measurement volume for a list of gas types comprising at least one first gas type ($G_1$) which is different from the reference gas;
b) substantially simultaneously recording (102) a first measured value ($p_1$) of the first measurement signal and recording a second measured value ($p_2$) of the second measurement signal;
c) determining (103) a resultant gas type (G*) as that gas type in the list of gas types which best matches the combination of the recorded first measured value ($p_1$) and the recorded second measured value ($p_2$), taking into account the first and second calibration data.

2. Method according to claim 1, comprising the additional step of

   d) determining (104) a resultant pressure ($p^*$) as a function of the recorded first measured value ($p_1$) and the first calibration data for the resultant gas type and/or as a function of the recorded second measured value ($p_2$) and the second calibration data for the resultant gas type.

3. Method according to one of claims 1 or 2, wherein the first and second pressure sensors are vacuum pressure sensors.

4. Method according to one of claims 1 to 3, wherein the first pressure sensor (1') is a Pirani sensor.

5. Method according to one of claims 1 to 4, wherein the second pressure sensor (1'') is a hot-cathode ionization vacuum gauge, in particular of the Bayard-Alpert type.

6. Method according to one of claims 1 to 5, wherein the second pressure sensor (1'') is a cold cathode ionization vacuum gauge, in particular an inverted magnetron.

7. Method according to one of claims 1 to 6, wherein the first and second gas-type specific calibration data ($K_1[G_i]$, $K_2[G_i]$) are each defined by a first and second factor ($C_1[G_i]$, $C_2[G_i]$), respectively, by which the first measurement signal and the second measurement signal, respectively, are to be multiplied to obtain the effective pressure.

8. Method according to claim 7, wherein a list of quotients is formed by forming a quotient ($Q[G_i]$) for each gas type from the list from the first factor for the respective gas type and the second factor for the respective gas type, wherein a recorded quotient ($Q$) is formed as a quotient of the recorded first measured value ($p_1$) and the recorded second measured value ($p_2$), and wherein in step c) it is determined to which of the quotients ($Q^*$) from the list of quotients the recorded quotient comes closest.

9. Method according to one of claims 1 to 8, wherein in step c) for each gas from the list of gases, starting from the recorded first measured value ($p_1$), based on the first and second gas-type-specific calibration data, it is determined what value is expected for the second measurement signal if this gas were present in the common measurement volume, and wherein the smallest deviation of this value from the recorded second measured value ($p_2$) is used as a criterion for determining the resultant gas type.

10. Method according to one of claims 1 to 9, wherein a plurality of pairs of a first measured value of the first pressure sensor and a second measured value of the second pressure sensor are each recorded as the pressure in the common measurement volume changes, wherein the gas type that best matches the combination of the recorded plurality of pairs is selected when determining the resultant gas type ($G^*$).

11. Method according to one of claims 1 to 10, wherein it is checked on the basis of the recorded first measured value ($p_1$), on the basis of the recorded second measured value ($p_2$) or on the basis of the resultant pressure ($p^*$) whether the pressure present in the common measurement volume lies in the overlap pressure measurement range and wherein the resultant pressure and/or the resultant gas type are rejected as invalid if this is not the case.

12. Apparatus (10) for carrying out the method according to one of claims 1 to 11, wherein the apparatus comprises a group (1) of pressure sensors arranged such that they are capable of measuring the pressure in a common measurement volume (2), wherein the group of pressure sensors comprises at least a first pressure sensor (1') having a first pressure measurement range (4') and a second pressure sensor (1'') having a second pressure measurement range (4''), wherein the first and second pressure measurement ranges overlap in an overlap pressure measurement range (6), wherein the first pressure sensor (1') is based on a first indirect pressure measurement principle and the second pressure sensor (1'') is based on a second indirect pressure measurement principle, and wherein the apparatus comprises means (5) for storing first calibration data and second calibration data, wherein the apparatus (10) comprises a control unit (12) which is operatively connected to a first measurement signal output (3') of the first pressure sensor, to a second measurement signal output (3'') of the second pressure sensor and to the means (5) for storing first calibration data and second calibration data for processing the measurement signals of the pressure sensors, **characterized in that** the control unit (12) is adapted to:

i) output the resultant gas type,

and/or

ii) determine the resultant gas type and determine the resultant pressure based on the resultant gas type and output the resultant pressure.

13. Computer program product comprising instructions which, when the instructions are executed by a control unit (12) of an apparatus (10) according to claim 12, cause the control unit to perform the steps of a method (100) according to one of claims 1 to 11.

**Revendications**

1. Procédé de fonctionnement d'un groupe de capteurs de pression (1', 1") qui sont agencés de façon telle qu'ils peuvent mesurer la pression dans un volume de mesure commun (2),

dans lequel le groupe de capteurs de pression comprend au moins un premier capteur de pression (1') associé à une première plage de mesures de pression (4') et un second capteur de pression (1") associé à une seconde plage de mesures de pression (4''), la première et la seconde plages de mesure de pression se chevauchant dans une zone d'intersection des mesures de pression (6),

dans lequel le premier capteur de pression (1') repose sur un premier principe de mesure indirecte de pression et est conçu pour émettre un premier signal de mesure étalonné sur un gaz de référence ($G_{ref}$), dans lequel le second capteur de pression (1'') repose sur un second principe de mesure indirecte de pression et est conçu pour émettre un second signal de mesure étalonné sur le gaz de référence, **caractérisé en ce que** le procédé comporte les étapes suivantes :

a) la mise à disposition (101) de premières données d'étalonnage ($K_1[G_i]$) spécifiques d'un type de gaz pour le premier signal de mesure et de secondes données d'étalonnage ($K_2[G_i]$) spécifiques d'un type de gaz pour le second signal de mesure, les premières et secondes données d'étalonnage décrivant une dépendance respectivement du premier ou second signal de mesure à la pression efficace ($p_{eff}$) et à un type de gaz dans un volume de mesure commun pour une liste de types de gaz comprenant au moins un premier type de gaz ($G_1$) qui est différent du gaz de référence ;

b) l'enregistrement essentiellement simultané (102) d'une première valeur de mesure ($p_1$) du premier signal de mesure et l'enregistrement d'une seconde valeur de mesure ($p_2$) du second signal de mesure ;

c) la détermination (103) d'un type de gaz de résultat ($G^*$) en tant que type de gaz, parmi la liste des types de gaz, qui est adapté, en considérant les première et seconde données d'étalonnage, au mieux à la combinaison de la première valeur de mesure enregistrée ($p_1$) et de la seconde valeur de mesure enregistrée ($p_2$).

2. Procédé selon la revendication 1, comprenant l'étape supplémentaire de

d) détermination (104) d'une pression de résultat ($p^*$) en fonction de la première valeur de mesure enregistrée ($p_1$) et des premières données d'étalonnage pour le type de gaz de résultat et/ou en fonction de la seconde valeur de mesure enregistrée ($p_2$) et des secondes données d'étalonnage pour le type de gaz de résultat.

3. Procédé selon l'une des revendications 1 ou 2, dans lequel le premier et le second capteurs de pression sont des transducteurs de vide.

4. Procédé selon l'une des revendications 1 à 3, dans lequel le premier capteur de pression (1') est un capteur Pirani.

5. Procédé selon l'une des revendications 1 à 4, dans lequel le second capteur de pression (1") est un manomètre à ionisation à cathode chaude, en particulier de type Bayard-Alpert.

6. Procédé selon l'une des revendications 1 à 5, dans lequel le second capteur de pression (1") est un manomètre à ionisation à cathode froide, en particulier un magnétron inversé.

7. Procédé selon l'une des revendications 1 à 6, dans lequel les premières et les secondes données d'étalonnage spécifiques d'un type de gaz ($K_1[G_i]$, $K_2[G_i]$) sont chacune définies respectivement par un premier et un second facteur ($C_1[G_i]$, $C_2[G_i]$), avec lequel doit être multiplié le premier signal de mesure ou respectivement le second signal de mesure pour obtenir la pression efficace.

**8.** Procédé selon la revendication 7, dans lequel on forme une liste de quotients en ce qu'à chaque type de gaz de la liste, on forme un quotient ($Q_1[G_i]$) du premier facteur pour le type de gaz respectif et du second facteur pour le type de gaz respectif, dans lequel un quotient enregistré (Q) est formé en tant que quotient de la première valeur de mesure enregistrée ($p_1$) et de la seconde valeur de mesure enregistrée ($p_2$), et dans lequel on détermine à l'étape c) le quotient, parmi les quotients ($Q^*$) de la liste des quotients, qui est le quotient enregistré suivant.

**9.** Procédé selon l'une des revendications 1 à 8, dans lequel on détermine à l'étape c), pour chaque gaz de la liste des gaz, en partant de la première valeur de mesure enregistrée ($p_1$) et sur la base des premières et des secondes données d'étalonnage spécifiques au type de gaz, le type de valeur que l'on attend pour le second signal de mesure dans le cas où ce gaz serait présent dans le volume de mesure commun, et dans lequel on utilise le plus petit écart de cette valeur à la seconde valeur de mesure enregistrée ($p_2$) en tant que critère pour la détermination du type de gaz de résultat.

**10.** Procédé selon l'une des revendications 1 à 9, dans lequel en soi, en cas de modification de pression dans le volume de mesure commun, on enregistre une pluralité de paires composées respectivement d'une première valeur de mesure du premier capteur de pression et d'une seconde valeur de mesure du second capteur de pression, dans lequel, lors de la détermination du type de gaz de résultat ($G^*$), on sélectionne le type de gaz qui est le mieux adapté à une combinaison de la pluralité enregistrée de paires.

**11.** Procédé selon l'une des revendications 1 à 10, dans lequel on vérifie, au moyen de la première valeur de mesure enregistrée ($p_i$), au moyen de la seconde valeur de mesure enregistrée ($p_2$) ou au moyen de la pression de résultat ($p^*$), si la pression présente dans le volume de mesure commun se trouve dans la zone d'intersection des mesures de pression, et dans lequel la pression de résultat et/ou le type de gaz de résultat est rejeté comme invalide si ce n'est pas le cas.

**12.** Dispositif (10) conçu pour réaliser le procédé selon l'une des revendications 1 à 11, dans lequel le dispositif comporte un groupe (1) de capteurs de pression qui sont agencés de façon telle qu'ils peuvent mesurer la pression dans un volume de mesure commun (2), dans lequel le groupe de capteurs de pression comprend au moins un premier capteur de pression (1') associé à une première plage de mesures de pression (4') et un second capteur de pression (1") associé à une seconde plage de mesures de pressions, dans lequel la première et la seconde plages de mesures de pression se chevauchent dans une zone d'intersection des mesures de pression (6), dans lequel le premier capteur de pression (1') repose sur un premier principe de mesure indirecte de pression et le second capteur de pression (1'') repose sur un second principe de mesure indirecte de pression, et dans lequel le dispositif comporte des moyens (5) de mémorisation de premières données d'étalonnage et de secondes données d'étalonnage, dans lequel le dispositif (10) comporte une unité de commande (12) qui est reliée par action avec une première sortie de signal de mesure (3') du premier capteur de pression, avec une seconde sortie de signal de mesure (3'') du second capteur de pression, et avec des moyens (5) de mémorisation des premières données d'étalonnage et des secondes données d'étalonnage pour traiter les signaux de mesure des capteurs de pression, **caractérisé en ce que** l'unité de commande (12) est conçue :

i) pour émettre un type de gaz de résultat,
et/ou
ii) pour déterminer le type de gaz de résultat et pour déterminer la pression de résultat sur la base du type de gaz de résultat et pour émettre la pression de résultat.

**13.** Produit de programme informatique comportant des instructions qui, lors de l'exécution des instructions par une unité de commande (12) d'un dispositif (10) selon la revendication 12, génèrent le fait que l'unité de commande réalise les étapes d'un procédé (100) selon l'une des revendications 1 à 11.

Fig. 1

$p_{eff}$

$\underline{10}$

2

1'

3'

1

1" 3"

$p_1, p_2$

$\underline{5}$

$\underline{12}$

$G^*$

$K_1[G_i], K_2[G_i]$

$p^*$

$\underline{100}$

START

$\underline{101}$

$\underline{102}$

$\underline{103}$

$G^*$

$\underline{104}$

$p^*$

ENDE

Fig. 2

p

4'

6

4"

Fig. 3.a)

p

4'

6

4"

Fig. 3.b)

**Abgelesener Druck (Kalibration für Luft)**
**p (mbar)**

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1394523 A1
- DE 19860500 A1
- EP 0379841 A2

**In der Beschreibung aufgeführte Nicht-Patentliteratur**

- **K. JOUSTEN**. On the gas species dependence of Pirani vacuum gauges. *Vac. Sci. Technol. A*, 03 May 2006, vol. 26
- **IKHSAN SETIAWAN et al.** Critical Temperature Differences of a Standing Wave Thermoacoustic Prime Mover with Various Helium-Based Binary Mixture Working Gases. *J. Phys.: Conf. Ser.*, 2015, vol. 622, 012010